# EUROPEAN PATENT SPECIFICATION

(11) **EP 4 283 388 B1**
(45) Date of publication and mention of the grant of the patent: **26.03.2025**
(21) Application number: 23174297.4
(22) Date of filing: 19.05.2023
(51) Int. Cl.: G02F 1/225

(54) **A TRAVELLING WAVE ELECTRO-OPTIC MODULATOR**
ELEKTROOPTISCHER WANDERWELLENMODULATOR
MODULATEUR ÉLECTRO-OPTIQUE À ONDE PROGRESSIVE

(30) Priority: 26.05.2022 GB 202207748
(43) Date of publication of application: 29.11.2023
(73) Proprietor: Axenic Limited, Sedgefield, Durham TS21 3FD (GB)
(72) Inventor: WALKER, Robert, Crook, DL15 8NA (GB)
(74) Representative: McDonough, Jonathan

(56) References cited:
- US-A1- 2019 129 273
- US-A1- 2020 004 102
- US-A1- 2021 124 232
- US-A1- 2021 341 812

## Description

The present invention relates to a travelling wave electro-optic modulator. More particularly, but not exclusively, the present invention relates to a travelling wave electro-optic modulator comprising a matched termination connected to electrode strips of the electro-optic modulator, the matched termination comprising a serpentine metallic strip connecting the electrode strips together and a semiconductive backplane matching element arranged within the substrate of the modulator, the serpentine metallic strip and backplane matching element being capacitively coupled together with the backplane matching element being further capacitively coupled to the electrode strips.

Travelling wave electro-optic modulators are well known in the field of electro-optic devices. During operation RF waves travel along transmission line electrode strips arranged on either side of optical waveguides. When these travelling waves reach the end of the electrode strips it is essential they are not reflected back along the electrode strips as this has an adverse effect on the operation of the device and on the electrical system driving it. A typical limit on normalised reflective RF power at the device input is -10dB. Scattering parameter S11 is conventionally used to denote this quantity.

It is known to terminate such electrode strips with a single resistive shunt path which is matched to the impedance of the electrode strips. This approach however has a number of drawbacks. The resistive element must be small enough to behave as a lumped element at the highest frequencies of interest. If integrated into the modulation device heat dissipation during operation must be properly managed. The presence of essentially a point heat source close to the optical waveguides can destabilise the operation of the electro-optic modulator. If external to the modulator such resistive elements need to be wire bonded to the ends of the electrode strips inevitably producing an RF discontinuity which causes reflections which rise with frequency. The addition of these external components to the electro-optic modulator increases the cost and complexity of manufacture of the electro-optic modulator.

US2020/0004102A1 (Kono, Naoya et al) discloses a Mach-Zehnder modulator which includes: first and second resistive elements each having first and second contact areas, the first and second contact areas of the second resistive element being arranged in a direction of a first axis, the first and second contact areas of the second resistive element being arranged in a direction of a second axis; a common conductor connecting the first contact areas of the first and second resistive elements with each other; first and second waveguide structures each including a waveguide portion extending in a direction of a third axis intersecting the first and second axes; a first signal conductor connected to the waveguide portion of the first waveguide structure and the second contact area of the first resistive element; and a second signal conductor connected to the waveguide portion of the second waveguide structure and the second contact area of the second resistive element.

The present invention seeks to overcome the problems of the prior art.

Accordingly, the present invention provides a travelling wave electro-optic modulator comprising
a substrate;
first and second parallel spaced apart electrode strips arranged on the substrate;
first and second optical waveguides arranged on the substrate, the optical waveguides being positioned between the first and second electrode strips and extending parallel thereto;
the first electrode strip comprising at least one portion extending proximate to the first optical waveguide;
the second electrode strip comprising at least one portion extending proximate to the second optical waveguide;
a semiconductive backplane layer arranged within the substrate and extending between the waveguides; and,
a matched termination connected to the first and second electrode strips, the matched termination comprising
   (a) a serpentine electrically conductive strip arranged on the substrate and connecting the first and second electrode strips together; and,
   (b) a semiconductive backplane matching element, the backplane matching element comprising a plurality of semiconductive backplane plates connected together by at least one semiconductive backplane arm, the plates and at least one backplane arm being arranged within the substrate, the plates being arranged proximate to the electrode strips such that each electrode strip is capacitively coupled to at least one backplane plate;
   the serpentine electrically conductive strip being arranged such that at least a portion of its length is proximate to at least one backplane arm such that the two are electrically coupled together.

The matched termination of the travelling wave electro-optic modulator according to the invention is a distributed structure. Heat can therefore be advantageously distributed over a wider area. Further, the matched termination can be manufactured entirely within the same foundry process as the rest of the device. The matched termination can therefore be included in the travelling wave electro-optic modulator during manufacture at no extra cost. Further, since the matched termination is manufactured integrally as part of the travelling wave electro-optic modulator there is no need to wire bond the matched termination to the waveguide strips. This eliminates any RF discontinuities and their associated reflection of RF travelling waves.

Preferably for at least one of the first and second electrodes the at least one portion is a T rail.

Preferably the serpentine strip is a metal strip.

Preferably the travelling wave electro-optic modulator further comprises a third electrode strip parallel to the first and second electrode strips.

Preferably the matched termination is further connected to the third electrode strip with the serpentine strip connecting the first, second and third electrode strips together.

Preferably the serpentine electrically conductive strip and backplane matching element are arranged in parallel spaced apart planes.

Preferably when viewed along a direction normal to the parallel spaced apart planes the serpentine electrically conductive strip and backplane matching element at least partially overlap.

Preferably each backplane arm is U shaped, at least a portion of the U overlapping with the serpentine electrically conductive strip when viewed along the direction normal to the parallel spaced apart planes.

Preferably at least one backplane arm comprises a backplane spur portion, at least a portion of the backplane spur portion overlapping with the serpentine electrically conductive strip when viewed along the direction normal to the parallel spaced apart planes.

Preferably the serpentine electrically conductive strip comprises a plurality of substantially parallel straight portions connected together by U shaped portions, at least some of the straight portions and U shaped portions overlapping the backplane matching element when viewed along the direction normal to the parallel spaced apart planes.

Preferably the serpentine electrically conductive strip and backplane matching element are configured such that the slope of the RF reflection coefficient as a function of frequency for one is substantially equal and opposite to that of the other at the point of crossover of the two.

Preferably the travelling wave electro-optic modulator further comprises an optical source connected to the optical waveguides.

Preferably the travelling wave electro-optic modulator further comprises an RF source connected to the first, second and third electrode strips.

Preferably the backplane matching element comprises an n doped AlGaAs portion arranged within the substrate.

The present invention will now be described by way of example only and not in any limitative sense with reference to the accompanying drawings in which
Figure 1 shows in schematic plan view a travelling wave electro-optic modulator according to the invention.
Figure 2 shows the travelling wave electro-optic modulator of figure 1 in vertical cross section;
Figure 3 shows the ends of the electrode strips and matched termination of an embodiment of a travelling wave electro-optic modulator according to the invention in perspective view;
Figure 4 shows the ends of the electrode strips and matched termination of figure 3 in plan view;
Figure 5 shows the ends of the electrode strips and matched termination of an alternative embodiment of a travelling wave electro-optic modulator according to the invention in plan view;
Figure 6 shows the reflection coefficient as a function of frequency for a matched termination comprising a serpentine metallic strip only, a matched termination comprising a backplane matching element only and a matched termination according to the invention; and,
Figure 7 shows the ends of the electrode strips and matched termination of a further embodiment of a travelling wave electro-optic waveguide according to the invention in plan view.

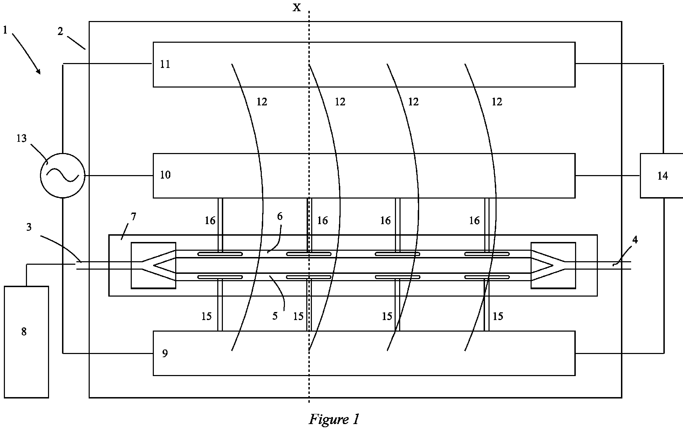

Shown in figure 1 in schematic plan view is a travelling wave electro-optic modulator 1 according to the invention. The travelling wave electro-optic modulator 1 comprises an insulating or semiinsulating substrate 2. Arranged on the substrate 2 are input and output optical waveguides 3,4 having first and second optical waveguides 5,6 extending therebetween. The first and second optical waveguides 5,6 are of substantially equal length. Arranged beneath the first and second optical waveguides 5,6 within the substrate 2 is a semiconductive backplane layer 7. An optical source 8 is connected to the input optical waveguide 3. Also arranged on the substrate are first and second parallel, spaced apart electrode strips 9,10. The optical waveguides 5,6 are arranged between the first and second electrode strips 9,10 and extend parallel thereto as shown.

A third electrode strip 11 is also arranged on the substrate 2 parallel to the second electrode strip 10 and on the opposite side of the second electrode strip 10 to the optical waveguides 5,6. Electrical connections 12 extend between the first and third electrode strips 9,11.

A first end of each of the first, second and third electrode strips 9,10,11 is connected to an RF source 13. The second opposite ends of each of the first, second and third electrode strips 9,10,11 is connected to a matched termination 14.

The first electrode strip 9 comprises a plurality of electrically conductive portions 15 (in this embodiment T rails) which extend proximate to the first optical waveguide 5. Similarly, the second electrode strip 10 comprises a plurality of electrically conductive portions 16 (again T rails) which extend to proximate to the second optical waveguide 6.

In use the optical source 8 provides a coherent light beam to the input optical waveguide 3. From here it is split approximately equally between the first and second optical waveguides 5,6. The light travels along the first and second optical waveguides 5,6 before being recombined at the output optical waveguide 4. If the light in the first optical waveguide 5 is in phase with the light in the second optical waveguide 6 at the point of recombination then the light in the two waveguides 5,6 combines constructively. However, if the light in the first optical waveguide 5 is not in phase with the light in the second optical waveguide 6 at the point of recombination then the light in the two waveguides 5,6 will not combine constructively. Accordingly, by controlling the phase relation between the light in the two waveguides 5,6 at the point of recombination one can control the intensity of the light output by the output optical waveguide 4.

At the same time that the optical source 8 provides light to the input optical waveguide 3, the RF source 13 provides an RF travelling wave to each of the first, second and third electrode strips 9,10,11. The electromagnetic fields generated in the optical waveguides 5,6 by means of the T rails 15,16 interact with the light passing along the first and second optical waveguides 5,6 so altering the phase of the light in the first and second optical waveguides 5,6. Accordingly, by supplying appropriate RF travelling waves to the first, second and third electrode strips 9,10,11 one can control the intensity of light output by the output optical waveguide 4.

A problem arises when the RF travelling waves reach the end of the electrode strips 9,10,11. If the travelling waves are reflected back towards the RF source 13 then these reflected travelling RF waves interfere with the incident RF travelling waves so negatively affecting the operation of the travelling wave electro-optic modulator 1. In order to overcome this problem the travelling wave electro-optic modulator 1 comprises a matched termination 14 connected to the first, second and third electrode strips 9,10,11 and which has an impedance matched to the line impedance of the first, second and third electrode strips 9,10,11, so eliminating any reflected travelling RF waves. The matched termination 14 is described in more detail below.

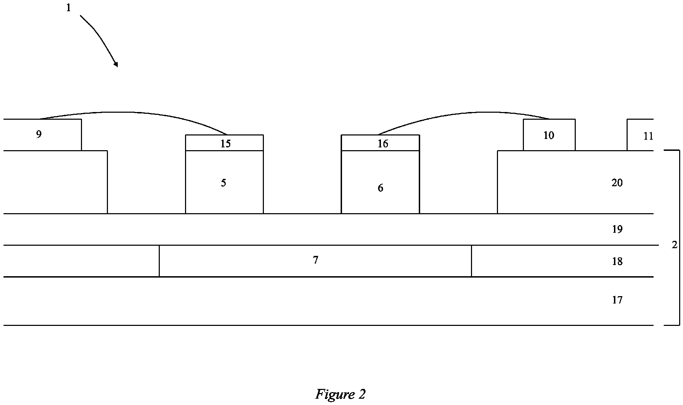

Shown in figure 2 is the travelling wave electro-optical modulator 1 of figure 1 in vertical cross section through line X of figure 1. The substrate 2 comprises an insulating bottom GaAs layer 17, an insulating bottom AlGaAs layer 18 arranged on the insulating bottom GaAs layer 17, an insulating top GaAs layer 19 arranged on the insulating bottom AlGaAs layer 18 and an insulating top AlGaAs layer 20 arranged on the insulating top GaAs layer 19. The first and second optical waveguides 5,6 are insulating AlGaAs and are arranged on the top GaAs layer 19 as shown. A portion 7 of the bottom AlGaAs layer 18 is n doped so that is it electrically semiconductive and forms the semiconductive backplane layer 7 arranged within the substrate 2 beneath the first and second optical waveguides 5,6 and extending therebetween.

The first, second and third waveguide strips 9,10,11 are arranged on the top AlGaAs layer 20. The T rails 15,16 extend from the first and second electrode strips 9,10 onto the top faces of the optical waveguides 5,6 as shown.

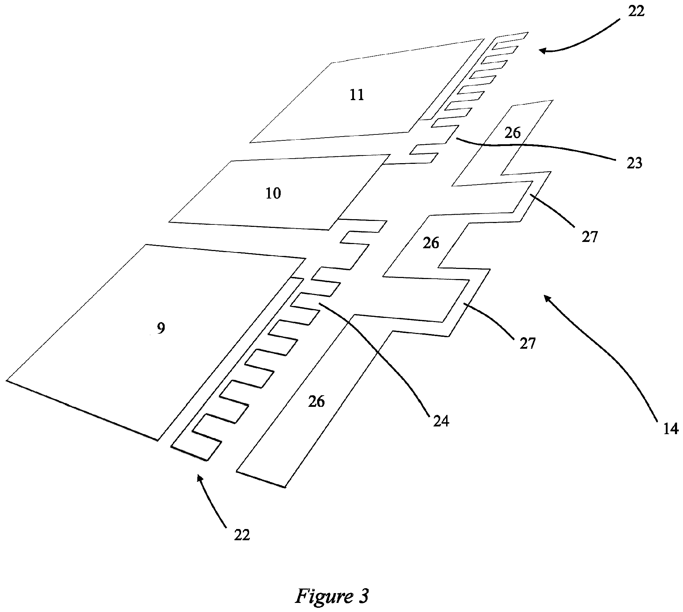

Figure 3 shows the ends of the first, second and third electrode strips 9,10,11 and the matched termination 14 connected thereto in perspective view. For clarity other elements of the travelling wave electro-optical modulator 1 are not shown.

The matched termination 14 comprises a serpentine, electrically conductive (in this case a metal) strip 22 arranged on the top AlGaAs layer 20. A first portion of the serpentine strip 22 connects the first and second electrode strips 9,10 together. A second portion of the serpentine strip 22 connects the second and third electrode strips 10,11 together. The serpentine metallic strip 22 is typically a tri-metal evaporated structure of titanium, platinum and gold. The thickness of the serpentine metallic strip 22 is tightly controlled and hence is highly consistent. The serpentine metallic strip 22 comprises a plurality of straight portions 23 connected together by a plurality of U shaped portions 24. The length of the straight portions 23, to some degree, determines the resistance of the serpentine metallic strip 22 whilst the number of U shaped portions 24, at least to some extent, determines its inductance.

The matched termination 14 further comprises a semiconductive backplane matching element 25 arranged within the substrate 2. The backplane matching element 25 is formed by an n doped semiconductive portion of the bottom AlGaAs layer 18 surrounded at its edges by an insulating portion of the bottom AlGaAs layer 18. The serpentine metallic strip 22 and the backplane matching element 25 are therefore arranged in parallel spaced apart planes separated by insulating material. The backplane matching element 25 is shaped as a plurality of semiconductive backplane plates 26 connected together by semiconductive U shaped backplane arms 27.

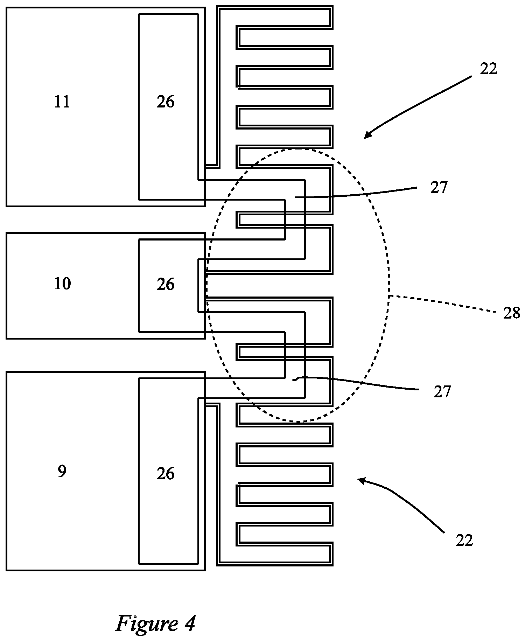

The spatial relationship between the electrode strips 9,10,11 , the serpentine metallic strip 22 and backplane matching element 25 is best shown in figure 4. Figure 4 shows these elements viewed along a direction normal to the parallel spaced apart planes. For the serpentine metallic strip 22, this extends beyond the ends of the electrode strips 9,10,11. As for the backplane matching element 25 the backplane plates 26 are arranged underneath and spaced apart from the ends of the electrode strips 9,10,11 along the direction of view so that the electrode strips 9,10,11 and backplane plates 26 are capacitively coupled together. The backplane arms 27 extend beyond the ends of the electrode strips 9,10,11. The backplane arms 27 and the serpentine metallic strip 22 are arranged such that when viewed along the direction normal to the parallel planes the backplane arms 27 and serpentine metallic strip 22 at least partially overlap in a coupling region 28. In the coupling region 28 the serpentine metallic strip 22 is proximate to the backplane arms 27 and so the two are electrically coupled together.

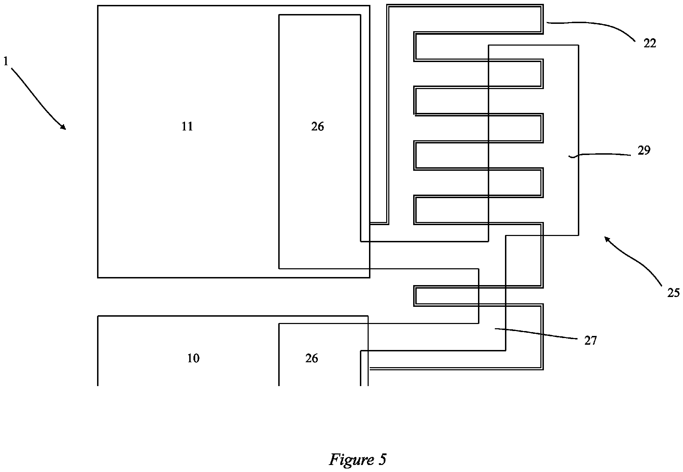

Figure 5 shows a similar view as figure 4 for a further embodiment of a travelling wave electro-optic modulator 1 according to the invention. Only the second and third electrode strips 10,11 are shown. This differs from the embodiment of figure 4 in that the backplane arm 27 comprises a backplane spur portion 29. The backplane spur portion 29 overlaps with a portion of the serpentine metallic strip 22 which increases the size of the coupling region 28 and so increases the electrical coupling between the serpentine metallic strip 22 and the backplane matching element 25.

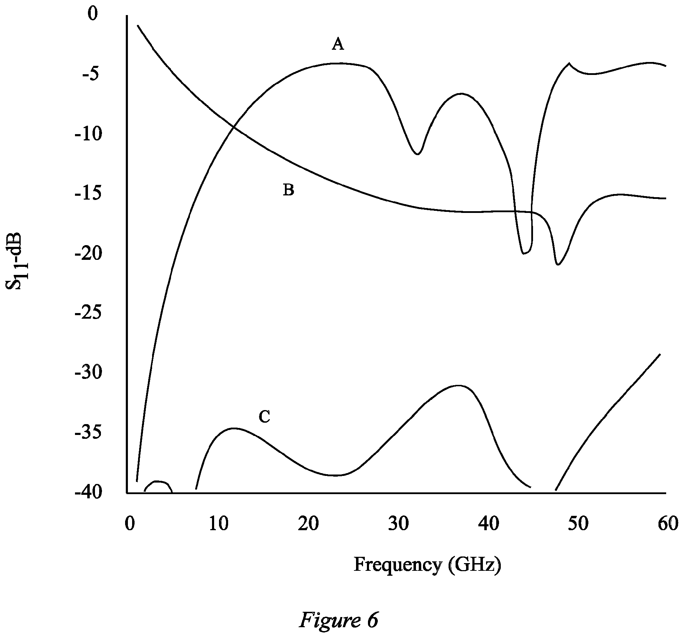

Shown in figure 6 is the reflection coefficient as a function of frequency for a matched termination 14 comprising the serpentine metal strip 22 only, a matched termination 14 comprising the backplane matching element 25 only and a matched termination 14 comprising both the serpentine metal strip 22 and backplane matching element 25 according to the invention as described in figure 5. These are curves A, B and C respectively.

Considering first the serpentine metallic strip 22 only, at DC and low frequencies the resistive behaviour of the serpentine metallic strip 22 dominates and so the reflectance is low. As the frequency increases however the inductive reactance of the serpentine metallic strip 22 dominates and the serpentine metallic strip 22 increasingly looks like an open circuit.

Considering the backplane matching element 25 only, the capacitive coupling between the backplane matching element 25 and the electrode strips 9,10,11 means that the backplane matching element 25 increasingly looks like an open circuit towards DC.

As can be seen from curve C a matched termination 14 according to the invention comprising both a serpentine metallic strip 22 and a backplane matching element 25 performs significantly better than either a serpentine metallic strip 22 alone or a backplane matching element 25 alone. This is due to the complex electromagnetic interaction between the serpentine metallic strip 22 and the backplane matching element 25 in the coupling region 28.

Curve C is only one example of the behaviour of a matched termination 14 according to the invention. One can tune the behaviour of the matched termination 14 of the travelling wave electro-optic modulator 1 according to the invention by tuning the behaviour of either or both of the serpentine metallic strip 22 and the backplane matching element 25. One can tune the behaviour of the serpentine metallic strip 22 by adjusting its geometry, in particular by changing the length of the straight sections 23 and the number of U sections 24. One can tune the behaviour of the backplane matching element 25 by adjusting the area of the backplane plates 26 and/or the distance the backplane plates 26 extend along the electrode strips 9,10,11. One can further tune the behaviour of the matched termination 14 by changing the size of the coupling region 28 again by changing the geometry of the serpentine metallic strip 22 or the geometry of the backplane arms 27 or by adding backplane spurs 29 to the backplane arms 27. Generally speaking it is desired to tune the serpentine metallic strip 22 and the backplane matching element 25 so that the slope of the RF reflection coefficient as a function of frequency for one is substantially equal and opposite in sign to that of the other at the point of the crossover of the two (ie at the point where curves A and B cross).

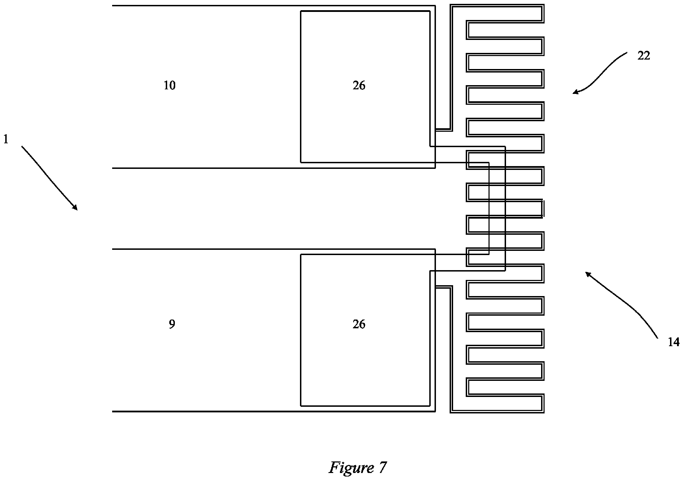

Shown in figure 7 are the ends of the electrode strips 9,10 and matched termination 14 of a further embodiment of a travelling wave electro-optic modulator 1 according to the invention. This embodiment is similar to that described above except it comprises first and second electrode strips 9,10 only.

In the above embodiments the substrate 2 is GaAs based. In alternative embodiments the travelling wave electro-optic modulator 1 is a silicon or InP based device.

## Claims

1. A travelling wave electro-optic modulator (1) comprising
a substrate (2);
first and second parallel spaced apart electrode strips (9, 10) arranged on the substrate (2);
first and second optical waveguides (5, 6) arranged on the substrate (2), the optical waveguides (5, 6) being positioned between the first and second electrode strips (9, 10) and extending parallel thereto;
the first electrode strip (9) comprising at least one portion (15) extending proximate to the first optical waveguide (5);
the second electrode strip (10) comprising at least one portion (16) extending proximate to the second optical waveguide (6);
a semiconductive backplane layer (7) arranged within the substrate (2) and extending between the waveguides (5, 6); and,
a matched termination (14) connected to the first and second electrode strips (9, 10), the matched termination (14) comprising
(a) a serpentine electrically conductive strip (22) arranged on the substrate (2) and connecting the first and second electrode strips (9, 10) together; and,
(b) a semiconductive backplane matching element (25), the backplane matching element (25) comprising a plurality of semiconductive backplane plates (26) connected together by at least one semiconductive backplane arm (27), the plates (26) and at least one backplane arm (27) being arranged within the substrate (2), the plates (26) being arranged proximate to the electrode strips (9, 10) such that each electrode strip (9, 10) is capacitively coupled to at least one backplane plate (26);
the serpentine electrically conductive strip (22) being arranged such that at least a portion of its length is proximate to at least one backplane arm (27) such that the two are electrically coupled together.

2. A travelling wave electro-optic modulator (1) as claimed in claim 1, wherein for at least one of the first and second electrodes (9, 10) the at least one portion (15, 16) is a T rail.

3. A travelling wave electro-optic modulator (1) as claimed in either of claims 1 or 2, wherein the serpentine strip (22) is a metal strip.

4. A travelling wave electro-optic modulator (1) as claimed in any one of claims 1 to 3, further comprising a third electrode strip (11) parallel to the first and second electrode strips (9, 10).

5. A travelling wave electro-optic modulator (1) as claimed in claim 4, wherein the matched termination (14) is further connected to the third electrode strip (11) with the serpentine strip (22) connecting the first, second and third electrode strips (9, 10, 11) together.

6. A travelling wave electro-optic modulator (1) as claimed in any one of claims 1 to 5, wherein the serpentine electrically conductive strip (22) and backplane matching element (25) are arranged in parallel spaced apart planes.

7. A travelling wave electro-optic modulator (1) as claimed in claim 6, wherein when viewed along a direction normal to the parallel spaced apart planes the serpentine electrically conductive strip (22) and backplane matching element (25) at least partially overlap.

8. A travelling wave electro-optic modulator (1) as claimed in claim 7, wherein each backplane arm (27) is U shaped, at least a portion of the U overlapping with the serpentine electrically conductive strip (22) when viewed along the direction normal to the parallel spaced apart planes.

9. A travelling wave electro-optic modulator (1) as claimed in either of claims 7 or 8, wherein at least one backplane arm (27) comprises a backplane spur portion (29), at least a portion of the backplane spur portion (29) overlapping with the serpentine electrically conductive strip (22) when viewed along the direction normal to the parallel spaced apart planes.

10. A travelling wave electro-optic modulator (1) as claimed in any one of claims 7 to 9, wherein the serpentine electrically conductive strip (22) comprises a plurality of substantially parallel straight portions (23) connected together by U shaped portions (24), at least some of the straight portions (23) and U shaped portions (24) overlapping the backplane matching element (25) when viewed along the direction normal to the parallel spaced apart planes.

11. A travelling wave electro-optic modulator (1) as claimed in any one of claims 1 to 10, wherein the serpentine electrically conductive strip (22) and backplane matching element (25) are configured such that the slope of the RF reflection coefficient as a function of frequency for one is substantially equal and opposite to that of the other at the point of crossover of the two.

12. A travelling wave electro-optic modulator (1) as claimed in any one of claims 1 to 11, further comprising an optical source (8) connected to the optical waveguides (5, 6).

13. A travelling wave electro-optic modulator (1) as claimed in any one of claims 1 to 12, further comprising an RF source (13) connected to the first, second and third electrode strips (9, 10, 11).

14. A travelling wave electro-optic modulator (1) as claimed in any one of claims 1 to 13, wherein the backplane matching element (25) comprises an n doped AlGaAs portion arranged within the substrate (2).

## Patentansprüche

1. Elektrooptischer Wanderwellenmodulator (1) umfassend:
ein Substrat (2);
erste und zweite parallele, beabstandete Elektrodenstreifen (9, 10), die auf dem Substrat (2) angeordnet sind;
erste und zweite Lichtwellenleiter (5, 6), die auf dem Substrat (2) angeordnet sind, wobei die Lichtwellenleiter (5, 6) zwischen den ersten und zweiten Elektrodenstreifen (9, 10) angeordnet sind und sich parallel zu diesen erstrecken;
wobei der erste Elektrodenstreifen (9) mindestens einen Abschnitt (15) umfasst, der sich dem ersten Lichtwellenleiter (5) folgend erstreckt;
wobei der zweite Elektrodenstreifen (10) mindestens einen Abschnitt (16) umfasst, der sich dem zweiten Lichtwellenleiter (6) folgend erstreckt;
eine halbleitende Busplatinenschicht (7), die innerhalb des Substrats (2) angeordnet ist und sich zwischen den Wellenleitern (5, 6) erstreckt; und
einen angepassten Abschluss (14), der mit den ersten und zweiten Elektrodenstreifen (9, 10) verbunden ist, wobei der angepasste Abschluss (14) Folgendes umfasst:
(a) einen gewundenen elektrisch leitenden Streifen (22), der auf dem Substrat (2) angeordnet ist und die ersten und zweiten Elektrodenstreifen (9, 10) miteinander verbindet; und
(b) ein halbleitendes Busplatinenanpassungselement (25), wobei das halbleitende Busplatinenanpassungselement (25) eine Vielzahl von halbleitenden Busplatinenplatten (26) umfasst, die durch mindestens einen halbleitenden Busplatinenarm (27) miteinander verbunden sind, wobei die Platten (26) und mindestens ein Busplatinenarm (27) innerhalb des Substrats (2) angeordnet sind, wobei die Platten (26) auf die Elektrodenstreifen (9, 10) folgend angeordnet sind, so dass jeder Elektrodenstreifen (9, 10) kapazitiv mit mindesten einer Busplatinenplatte (26) gekoppelt ist;
wobei der gewundene elektrisch leitende Streifen (22) so angeordnet ist, dass mindestens ein Abschnitt seiner Länge auf mindestens einen Busplatinenarm (27) folgt, so dass die beiden elektrisch miteinander gekoppelt sind.

2. Elektrooptischer Wanderwellenmodulator (1) wie in Anspruch 1 beansprucht, wobei bei mindestens einer der ersten und zweiten Elektroden (9, 10) der mindestens eine Abschnitt (15, 16) eine T-Schiene ist.

3. Elektrooptischer Wanderwellenmodulator (1) wie in Anspruch 1 oder 2 beansprucht, wobei der gewundene Streifen (22) ein Metallstreifen ist.

4. Elektrooptischer Wanderwellenmodulator (1) wie in einem der Ansprüche 1 bis 3 beansprucht, ferner umfassend einen dritten Elektrodenstreifen (11), der zu den ersten und zweiten Elektrodenstreifen (9, 10) parallel ist.

5. Elektrooptischer Wanderwellenmodulator (1) wie in Anspruch 4 beansprucht, wobei der angepasste Abschluss (14) ferner mit dem dritten Elektrodenstreifen (11) verbunden ist, wobei der gewundene Streifen (22) die ersten, zweiten und dritten Elektrodenstreifen (9, 10, 11) miteinander verbindet.

6. Elektrooptischer Wanderwellenmodulator (1) wie in einem der Ansprüche 1 bis 5 beansprucht, wobei der gewundene elektrisch leitende Streifen (22) und das Busplatinenanpassungselement (25) in parallel beabstandeten Ebenen angeordnet sind.

7. Elektrooptischer Wanderwellenmodulator (1) wie in Anspruch 6 beansprucht, wobei der gewundene elektrisch leitende Streifen (22) und das Busplatinenanpassungselement (25) sich, entlang einer senkrechten Richtung zu den parallel beabstandeten Ebenen betrachtet, mindestens teilweise überlappen.

8. Elektrooptischer Wanderwellenmodulator (1) wie in Anspruch 7 beansprucht, wobei jeder Busplatinenarm (27) U-förmig ist, wobei mindestens ein Abschnitt des U, entlang einer Richtung in rechtem Winkel zu den parallel beabstandeten Ebenen betrachtet, mit dem gewundenen elektrisch leitenden Streifen (22) überlappt.

9. Elektrooptischer Wanderwellenmodulator (1) wie in Anspruch 7 oder 8 beansprucht, wobei mindestens ein Busplatinenarm (27) einen Busplatinenabzweigungsabschnitt (29) umfasst, wobei mindestens ein Abschnitt des Busplatinenabzweigungsabschnitts (29), entlang einer Richtung in rechtem Winkel zu den parallel beabstandeten Ebenen betrachtet, mit dem gewundenen elektrisch leitenden Streifen (22) überlappt.

10. Elektrooptischer Wanderwellenmodulator (1) wie in einem der Ansprüche 7 bis 9 beansprucht, wobei der gewundene elektrisch leitende Streifen (22) eine Vielzahl von im Wesentlichen parallelen geraden Abschnitten (23) umfasst, die durch U-förmige Abschnitte (24) miteinander verbunden sind, wobei mindestens einige der geraden Abschnitte (23) und der U-förmigen Abschnitte (24) entlang einer Richtung in rechtem Winkel zu den parallel beabstandeten Ebenen betrachtet, das Busplatinenanpassungselement (25) überlappen.

11. Elektrooptischer Wanderwellenmodulator (1) wie in einem der Ansprüche 1 bis 10 beansprucht, wobei der gewundene elektrisch leitende Streifen (22) und das Busplatinenanpassungselement (25) so konfiguriert sind, dass am Kreuzungspunkt der beiden die Neigung des Funkwellenreflexionskoeffizienten in Abhängigkeit der Frequenz für das eine im Wesentlichen gleich und gegenteilig zu der des anderen ist.

12. Elektrooptischer Wanderwellenmodulator (1) wie in einem der Ansprüche 1 bis 11 beansprucht, ferner umfassend eine optische Quelle (8), die mit den Lichtwellenleitern (5, 6) verbunden ist.

13. Elektrooptischer Wanderwellenmodulator (1) wie in einem der Ansprüche 1 bis 12 beansprucht, ferner umfassend eine Funkfrequenzquelle (13), die mit den ersten, zweiten und dritten Elektrodenstreifen (9, 10, 11) verbunden ist.

14. Elektrooptischer Wanderwellenmodulator (1) wie in einem der Ansprüche 1 bis 13 beansprucht, wobei das Busplatinenanpassungselement (25) einen n-dotierten AIGaAs-Abschnitt umfasst, der innerhalb des Substrats (2) angeordnet ist.

## Revendications

1. Modulateur électro-optique à onde progressive (1) comprenant :
un substrat (2) ;
des première et deuxième bandes d'électrode espacées en parallèle (9, 10) disposées sur le substrat (2) ;
des premier et deuxième guides d'onde optiques (5, 6) disposés sur le substrat (2), les guides d'onde optiques (5, 6) étant positionnés entre les première et deuxième bandes d'électrode (9, 10) et s'étendant de manière parallèle à celles-ci ;
la première bande d'électrode (9) comprenant au moins une partie (15) s'étendant à proximité du premier guide d'onde optique (5) ;
la deuxième bande d'électrode (10) comprenant au moins une partie (16) s'étendant à proximité du deuxième guide d'onde optiques (6) ;
une couche semi-conductrice de fond de panier (7) disposée à l'intérieur du substrat (2) et s'étendant entre les guides d'onde (5, 6) ; et,
une terminaison appariée (14) connectée aux première et deuxième bandes d'électrode (9, 10), les terminaisons appariées comprenant :
(a) une bande conductrice d'électricité en serpentin (22) disposée sur le substrat (2) et connectant ensemble les première et deuxième bandes d'électrode (9, 10) ; et,
(b) un élément d'adaptation semi-conducteur de fond de panier (25), l'élément d'adaptation de fond de panier (25) comprenant une pluralité de plaques semiconductrices de fond de panier (26) connectées ensemble par au moins un bras semi-conducteur de fond de panier (27), les plaques (26) et le au moins un bras de fond de panier (27) étant disposés à l'intérieur du substrat (2), les plaques (26) étant disposées à proximité des bandes d'électrode (9, 10) de sorte que chaque bande d'électrode (9, 10) est couplée en capacitance à au moins une plaque de fond de panier (26) ;
la bande conductrice d'électricité en serpentin (22) étant disposée de sorte que au moins une partie de sa longueur se trouve à proximité du au moins un bras de fond de panier (27) de sorte que les sont couplés ensemble électriquement.

2. Modulateur électro-optique à onde progressive (1) selon la revendication 1, selon lequel pour au moins l'une parmi les première et deuxième électrodes (9, 10), la au moins une partie (15, 16) se présente sous forme de rail en T.

3. Modulateur électro-optique à onde progressive (1) selon la revendication 1 ou la revendication 2, selon lequel la bande en forme de serpentin (22) est une bande métallique.

4. Modulateur électro-optique à onde progressive (1) selon l'une quelconque des revendications 1 à 3, comprenant en outre une troisième bande d'électrode (11) en parallèle aux première et deuxième bandes d'électrode (9, 10).

5. Modulateur électro-optique à onde progressive (1) selon la revendication 4, selon lequel la terminaison appariée (14) est en outre connectée à la troisième bande d'électrode (11), la bande en forme de serpentin (22) connectant ensemble les première, deuxième et troisième bandes d'électrode (9, 10, 11).

6. Modulateur électro-optique à onde progressive (1) selon l'une quelconque des revendications 1 à 5, selon lequel la bande conductrice d'électricité en forme de serpentin (22) et l'élément d'adaptation de fond de panier (25) sont disposés selon des plans espacés en parallèle.

7. Modulateur électro-optique à onde progressive (1) selon la revendication 6, selon lequel vue selon une direction à la normale des plans espacés en parallèle, la bande conductrice d'électricité en forme de serpentin (22) et l'élément d'adaptation de fond de panier (25) se chevauchent au moins partiellement.

8. Modulateur électro-optique à onde progressive (1) selon la revendication 7, selon lequel chaque bras de fond de panier (27) présente une forme en U, au moins une partie de la forme en U se chevauchant avec la bande conductrice d'électricité en forme de serpentin (22) vues le long de la direction normale aux plans espacés en parallèle.

9. Modulateur électro-optique à onde progressive (1) selon l'une quelconque des revendications 7 ou 8, selon lequel au moins un bras de fond de panier (27) comprend une partie formant tige de fond de panier (29), au moins une partie de la partie formant tige de fond de panier (29) se chevauchant avec la bande conductrice d'électricité en forme de serpentin (22), vue le long d'une direction à la normale des plans espacés en parallèle.

10. Modulateur électro-optique à onde progressive (1) selon l'une quelconque des revendications 7 à 9, selon lequel la bande conductrice d'électricité en forme de serpentin (22) comprend une pluralité de parties droites sensiblement parallèles (23) connectées ensemble par des parties en forme d'U (24), au moins une partie des parties droites (23) et des parties en forme d'U (24) se chevauchant avec l'élément d'adaptation de fond de panier (25), vues le long d'une direction à la normale des plans espacés en parallèle.

11. Modulateur électro-optique à onde progressive (1) selon l'une quelconque des revendications 1 à 10, selon lequel la bande conductrice d'électricité en forme de serpentin (22) et l'élément d'adaptation de fond de panier (25) sont configurés de sorte que la pente du coefficient de réflexion RF en tant que fonction de la fréquence pour l'une est sensiblement égale et à l'opposé de celle de l'autre au point de leur croisement.

12. Modulateur électro-optique à onde progressive (1) selon l'une quelconque des revendications 1 à 11, comprenant en outre une source optique (8) connectée aux guides d'onde optiques (5, 6).

13. Modulateur électro-optique à onde progressive (1) selon l'une quelconque des revendications 1 à 12, comprenant en outre une source de RF (13) connectée aux première, deuxième et troisième bandes d'électrode (9, 10, 11).

14. Modulateur électro-optique à onde progressive (1) selon l'une quelconque des revendications 1 à 13, selon lequel l'élément d'adaptation de fond de panier (25) comprend une partie AlGaAs dopée en n disposée à l'intérieur du substrat (2).
